# EUROPEAN PATENT APPLICATION

(11) **EP 2 051 191 A1**
(43) Date of publication of application: **22.04.2009**
(21) Application number: 08166947.5
(22) Date of filing: 17.10.2008
(51) Int. Cl.: G06K 19/077, A63F 9/10

(54) **RFID system capable of detecting RFID tag orientation, an RFID tag thereof, and a puzzle system using the RFID system**

(30) Priority: 18.10.2007 US 960872 P
(71) Applicant: G-Time Electronic Co., Ltd., Siangshan District Hsinchu City (TW)
(72) Inventor: Che-Ming, Wu, Taichung County 423 (TW); Tien-Fa, Hou, Hsinchu City 300 (TW)
(74) Representative: Rühland, Hans Constantin

(57) **Abstract**

In a radio-frequency identification (RFID) system capable of detecting RFID tag orientation, a RFID tag (49) thereof comprises a plurality of antennas (111...114). When a particular one of the antennas receives an RF signal from a reader of the RFID system, the RFID tag is able to send out an identification data corresponding to that antenna receiving the RF signal, enabling a processor (44) of the RFID system (4) to determine the position and orientation of the RFID tag based on the identification data read by the reader. A puzzle system can be designed by employing the RFID system capable of detecting RFID tag orientation.

## Description

### FIELD OF THE INVENTION

The present invention relates to a radio-frequency identification (RFID) system, and more particularly to an RFID system having an RFID tag provided with a plurality of antennas and accordingly, being capable of detecting an orientation of the RFID tag. The present invention also relates to an RFID tag enabling an RFID system to detect its orientation, and a puzzle system using the RFID system capable of detecting an RFID tag orientation.

### BACKGROUND OF THE INVENTION

A radio-frequency identification (RFID) tag has the advantages of not requiring an internally built power source, and being lightweight, compact, and wirelessly inducible. With these advantages, the RFID tag has been widely applied to many different fields, comprising warehouse management, logistics, induction-type control, etc. However, a conventional reader can only detect the existence of the RFID tag. That is, when the RFID tag receives an RF signal transmitted from the reader, the RFID tag can correspondingly generate an amount of electric power and wirelessly sends out an identification data thereof. When receiving the identification data, the reader is able to know there is an RFID tag nearby the reader. From the received identification data, the reader is also able to retrieve data about the object having the RFID tag attached thereto. However, none of the currently available RFID tags allows the reader to detect an orientation of the RFID tag. Therefore, the application of the RFID tags is still largely limited.

### SUMMARY OF THE INVENTION

It is therefore a primary object of the present invention to provide an RFID system and an RFID tag thereof, so as to widen the application of the RFID tag.

To achieve the above and other objects, the RFID tag according to an embodiment of the present invention comprises a plurality of antennas, a plurality of power receiving modules, and a wireless communication module. The plurality of antennas independently receives an RF signal each, and the plurality of power receiving modules are correspondingly connected to the plurality of antennas. One of the power receiving modules will output an electric power according to an RF signal received by an antenna corresponding thereto. The wireless communication module is electrically connected to the plurality of power receiving modules. After receiving the electric power generated by the power receiving module, the wireless communication module determines an identification data that is corresponding to the antenna receiving the RF signal, and sends out the identification data via at least one of the plurality of antennas.

An RFID tag according to another embodiment of the present invention comprises a memory, a plurality of antennas, a plurality of power receiving modules, a logic circuit, a control circuit, and a modulation circuit The memory stores a first identification data. The plurality of antenna independently receives an RF signal each. The plurality of power receiving modules are correspondingly connected to the plurality of antennas. According to an RF signal received by an antenna corresponding thereto, one of' the power receiving modules outputs an electric power for operation of the RFID. The logic circuit is electrically connected to the plurality of power receiving modules to generate a position data corresponding to the antenna receiving the RF signal, The control circuit combines the first identification data with the position data to generate a second identification data. The modulation circuit modulates the second identification data to generate a modulation signal, which is then sent out via at least one of the antennas.

To achieve the above and other objects, the RFID system capable of detecting RFID tag orientation according to a preferred embodiment of the present invention comprises at least one RFID tag, such as any one of that having been described above, a reader, and a processor, The RFID tag receives an RF signal transmitted from the reader and tirelessly outputs an identification data, which is received by the reader. Based on the identification data received by the reader, the processor can determine an orientation of the RFID tag.

A puzzle system can be designed by employing the RFID system and the RFID tag of the present invention. Puzzle system according to a preferred embodiment of the present invention, comprises a platform, a plurality of puzzle pieces, a reader, and processor. Each of the puzzle pieces is provided with at least one of the above-described RFID tags for receiving an RF signal transmitted from the reader and wirelessly outputting an identification data, which is received by the reader. Based on the identification data, the processor determines an orientation of the RFID tag. Then, based on the orientation of the RFID tag, the processor further determines whether the puzzle pieces are correctly positioned on the platform.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein

**Fig. 1** is a general block diagram of an RFID tag according to the present invention;

**Fig. 2** is a block diagram of an RFID tag according to a first embodiment of the present invention;

**Fig. 3** is a block diagram of an RFID tag according to a second embodiment of the present invention;

**Fig. 4** is a block diagram of' an RFID system capable of detecting RFID tag orientation according to the present invention;

**Fig. 5** schematically shows the arrangement of an RFID tag of the present invention on a planar object;

**Fig. 6** schematically shows the arrangement of an RFID tag of the present invention on a three-dimensional object; and

**Fig. 7** schematically shows a puzzle system employing the RFID system of the present invention.

### DETAILED DESCRIPTION OF THE PREFERRED EMBODIMENTS

Exemplary embodiments of the present invention are described herein in the context of an RFID system and an RFID tag thereof, and a puzzle system using the same.

Those of ordinary skilled in the art will realize that the following detailed description of the exemplary embodiment(s) is illustrative only and is not intended to be in any way limiting. Other embodiments will readily suggest themselves to such skilled persons having the benefit of this disclosure. Reference will now be made in detail to implementations of the exemplary embodiment(s) as illustrated in the accompanying drawings. The same reference indicators will be used throughout the drawings and the following detailed description to refer to the same or like parts.

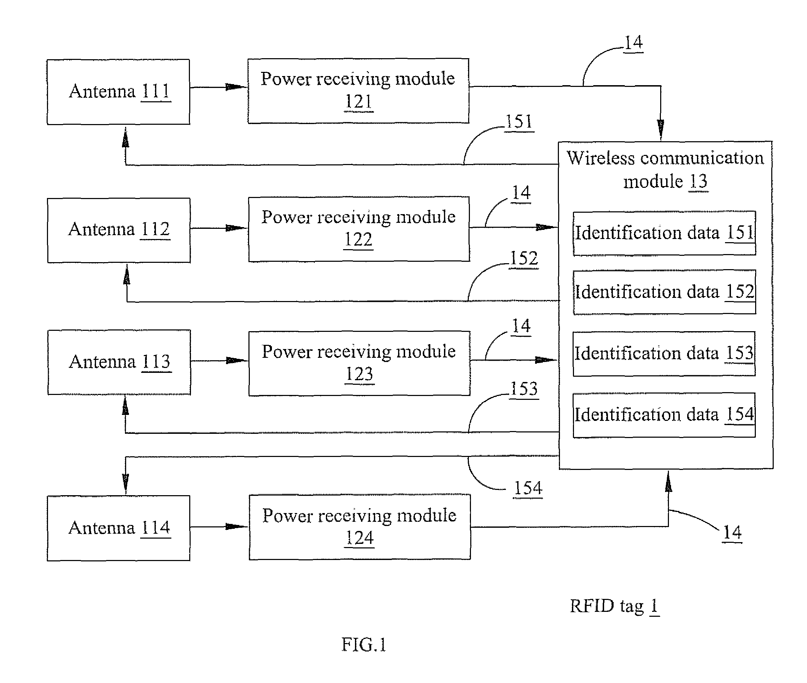

**Fig. 1** illustrates a general block diagram of a radio-frequency identification (RFID) tag according to the present invention, The RFID tag 1 comprises a plurality of antennas 111∼114, a plurality of power receiving modules 121∼124, and a wireless communication module 13 The power receiving modules 121∼124 are in a one-to-one correspondence to the antennas 111∼114 When at least one of the antennas receives a radio-frequency (RF) signal, the power receiving module corresponding to that antenna outputs an amount of electric power 14 based on the received RF signal. For instance, when the antenna 111 receives an RF signal, the power receiving module 121 will generate electric power. Preferably, the power receiving modules each comprise an RF-to-DC (direct current) circuit, and can, depending on actual need, further comprise a DC limiting circuit.

The wireless communication module 13 is electrically connected to the power receiving modules 121∼124. When receiving power from one of the power receiving modules 121∼124, the wireless communication module 13 determines an identification data that is corresponding to the antenna receiving the RF signal, and sends out the identification data via the antenna receiving the RF signal. For instance, when the antenna 111 receives an RF signal, the power receiving module 121 generates electric power 14 and supplies the same to the wireless communication module 13. Then, the wireless communication module 13 outputs an identification data 151 that is corresponding to the antenna 111, and the identification data 151 is wirelessly sent out via the antenna 111 Similarly, when the antenna 112, 113 or 114 receives an RF signal, the corresponding power receiving module 122, 123 or 124 will generate electric power 14, so that the wireless communication module 13 outputs the identification data 152, 153 or 154 corresponding to the antenna 112, 113 or 114.

The antennas are preferably arranged to be orthogonal to one another or be spaced from one another by a predetermined distance, so that only one of the antennas can receive the RF signal at the same time point. In this manner, it is able to determine which antenna has received the RF signal by recognizing the identification data sent out by the RFID tag 1. If the antennas are arranged at different positions on a planar object or on different faces of a three-dimensional (3D) object, it is possible to further determine how the planar object or the 3D object is positioned.

In **Fig. 1**, there are shown four antennas and four power receiving modules only for purpose of exemplification. It is understood, the number of the antennas and of the power receiving modules is not limited to four, but may be any other quantity.

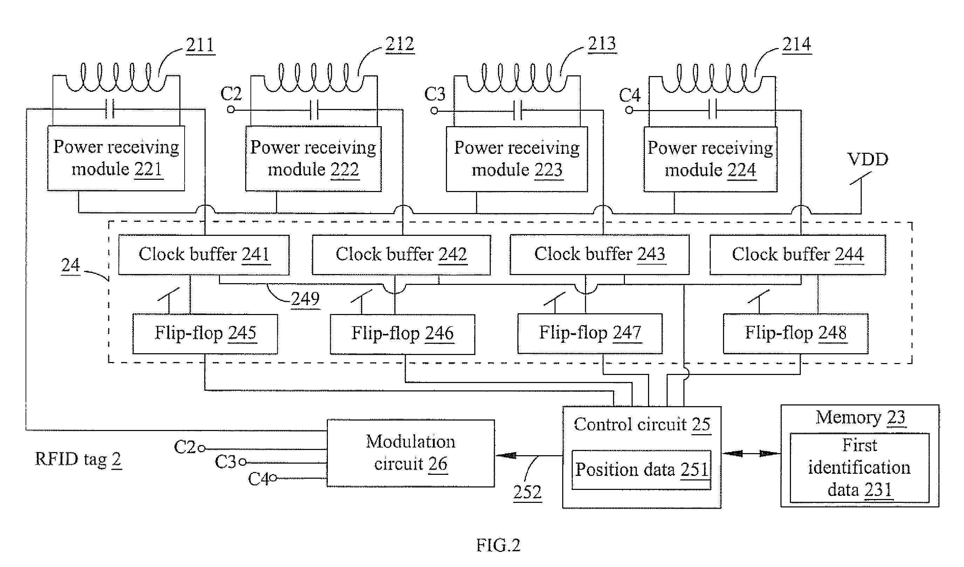

**Fig. 2** illustrates a block diagram of an RFID tag according to a first embodiment of the present invention. The RFID tag 2 comprises a memory 23, a plurality of antennas 211∼214, a plurality of power receiving modules 221∼224, a logic circuit 24, a control circuit 25, and a modulation circuit 26. The memory 23 is used to store a first identification data 231, and the power receiving modules 221∼224 are correspondingly connected to the antennas 211∼214. When one of the antennas 211∼214 receives an RF signal, the power receiving module corresponding to that antenna will output electric power VDD according to the received RF signal for operation of all the components in the RFID tag 2

The logic circuit 24 comprises a plurality of clock buffers 241∼244, and a plurality of flip-flops 245∼248 The clock buffers 241∼244 each are correspondingly connected to an end of the antennas 211~244 to generate a clock 249 according to a voltage signal at the end of the corresponding antenna, and the generated clock 249 is used by the memory 23, the control circuit 25, and the modulation circuit 26 for them to operate. The flip-flops 245∼248 are correspondingly connected to the clock buffers 241∼244 respectively, and the outputs of the flip-flops 245~248 are electrically connected to the control circuit 25.

Inputs of the flip-flops 245∼248 are electrically connected to the power supply VDD. When one of the power receiving modules 221∼224 generates a voltage VDD that is sufficient for the RFID tag 2 to operate, the flip-flops 245∼248 are reset, so that the outputs of the flip-flops 245∼248 are set to logic zero (0). Since the flip-flops 245∼248 are correspondingly connected to the clock buffers 241∼244, the flip-flops 245∼248 can be triggered by the output signals of the clock buffers 241∼244, so that the voltage VDD at the inputs of the flip-flops 245∼248 is allowed to be transmitted to the outputs of the flip-flops 245∼248 Therefore, for other antennas that do not receive an RF signal, the clock buffers corresponding thereto will not generate any clock or any trigger signal, and outputs of the flip-flops corresponding thereto will maintain at the reset state, that is, logic 0. On the other hand, for the antenna that has received an RF signal, the clock buffer corresponding thereto will generate a clock 249, the flip-flop corresponding thereto will be triggered, and the output of the corresponding flip-flop is changed to logic 1 (VDD). Thus, based on the output values of the flip-flops 245∼248, the control circuit 25 can determine a position data 251 corresponding to the antenna receiving the RF signal. For instance, when the antenna 211, 212, 213 or 214 receives an RF signal, the position data 251 will be "D001", "0010", "0100" or "1000". Depending on actual need, the control circuit 25 can further comprise a register to store the position data 251.

When the memory 23 and the control circuit 25 receive the power supply VDD, the control circuit 25 can determine the position data 251 and read the first identification data 231 from the memory 23, and then combines the first identification data 231 with the position data 251 to generate a second identification data 252. For example, when the first identification data 231 is "1101111" and the position data 251 is "0010", the second identification data 252 shall be "00101101111".

The modulation circuit 26 is electrically connected to the control circuit 25 and to an end of each of the antennas 211∼214. The modulation circuit 26 modulates the second identification data 252 to generate a modulation signal, which is then wirelessly sent out via the antennas 211∼214. Preferably, the modulation signal is sent out via the antenna corresponding to the position data 251.

Besides, when the memory 23, the control circuit 25, the modulation circuit 26, and the flip-flops 245∼248 each require different operating voltages, the RFID tag 2 can further comprise a power management circuit, such as a charge pump circuit, to raise the voltage value of the electric power output by the power receiving modules 221∼224. Preferably, the power receiving modules each comprise an RF-to-DC circuit, and, depending on actual need, can further comprise a DC limiting circuit. And, the DC limiting circuit preferably comprises a voltage stabilizer and an RF protection circuit.

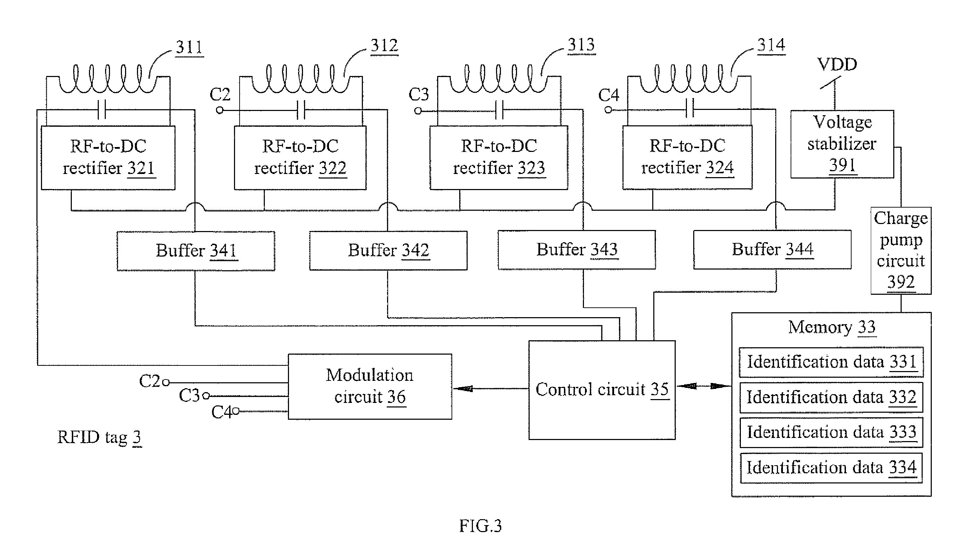

**Fig. 3** illustrates a block diagram of an RFID tag 3 according to a second embodiment of the present invention. The RFID tag 3 comprises a memory 33, a plurality of antennas 311∼314, a plurality of RF-to-DC rectifiers 321∼324, a plurality of buffers 341∼344, a control circuit 35, a voltage stabilizer 391, a charge pump circuit 392, and a modulation circuit 36 The memory 33 has a plurality of identification data 331∼334 stored thereon, and the identification data 331∼334 are in a one-to-one correspondence to the antennas 311∼314

The RF-to-DC rectifiers 321∼324 are electrically connected to the antennas 311∼314, respectively. Based on an RF signal received by the antenna, the RF-to-DC rectifier corresponding to that antenna generates electric power VDD, which is supplied to other components of the RFID tag 3 for operation. The voltage stabilizer 391 can further stabilize the electric power VDD. The buffers 341∼344 are electrically connected to an end of the antennas 311∼314, respectively, and outputs of the buffers 341∼344 are electrically connected to the control circuit 35.

Based on the output signal from the buffers 341∼344, the control circuit 35 can determine which one of the antennas has received an RF signal and then reads an identification data that is corresponding to that antenna from the memory 33. The read identification data is then output to the modulation circuit 36. For instance, when the antenna 311 receives an RF signal, the control circuit 35 reads the identification data 331; or, when the antenna 312 receives an RF signal, the control circuit 35 will read the identification data 332. Thereafter, the modulation circuit 36 modulates the identification data to generate a modulation signal, which is wirelessly sent out via the antennas 311∼314. Preferably, the modulation signal is sent out via the antenna that is corresponding to the identification data

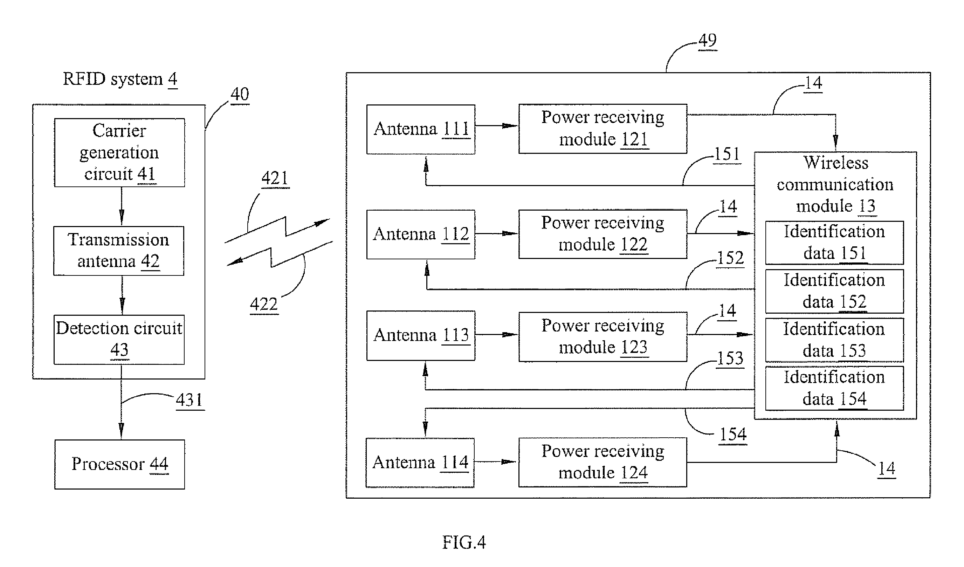

**Fig. 4** illustrates a block diagram of an RFID system capable of detecting RFID tag orientation according to the present invention. As shown, the RFID system 4 comprises at least one RFID tag 49, a reader 40, and a processor 44. The RFID tag 49 has a plurality of antennas. When a particular one of the antennas receives an RF signal, the RFID tag 49 would wirelessly send out a specific identification data corresponding to that antenna. The RFID tag 49 can be any of the RFID tags shown in **Figs. 1****,** **2** **and** **3****,** and is not repeatedly described in detail herein. The reader 40 comprises a carrier generation circuit 41, a transmission antenna 42, and a detection circuit 43. The carrier generation circuit 41 is used to generate a carrier, which has a time-varying current which then pass the transmission antenna 42 to emit an RF signal 421, After receiving the RF signal 421, the RFID tag 49 correspondingly transmits a wireless signal 422 containing an identification data 431. The detection circuit 43 receives the wireless signal 422 via the transmission antenna 42, and retrieves the identification data 431 from the wireless data 422. Since the identification data 431 corresponds to the antenna of the RFID tag 49 that receives the RF signal 421, the processor 44 can determine the orientation of the RFID tag 49 according to the identification data 431.

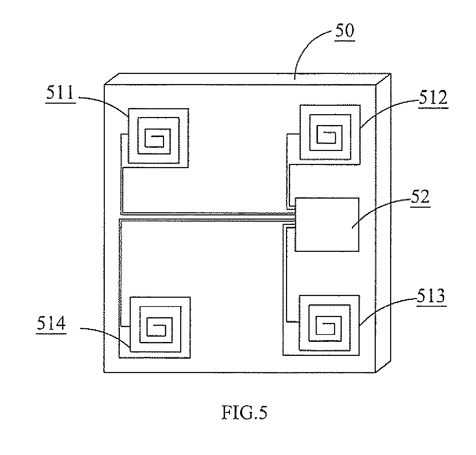

**Fig. 5** schematically illustrates the arrangement of a RFID tag of the present invention on a planar object. In the illustrated **Fig. 5**, the RFID tag is arranged on a planar object 50, and comprises four antennas 511∼514 and a chip 52. Except for the antennas, all other related circuits, such as the logic circuit, the memory, the control circuit, the RF-to-DC rectifiers, etc , that have been mentioned in the above-described RFID tag embodiments are provided on the chip 52. The antennas 511∼514 are separately arranged at four different corners of the planar object 50. Therefore, the orientation of the RFID tag can indicate how the planar object 50 is positioned.

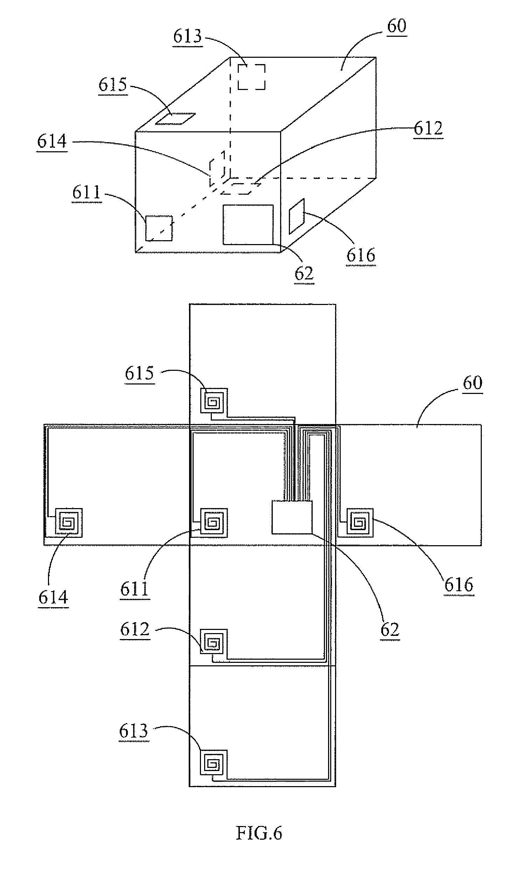

**Fig. 6** schematically illustrates the arrangement of a RFID tag of the present invention on a three-dimensional (3D) object In **Fig. 6**, the RFID tag is arranged on a cuboidal object 60, and comprises six antennas 611∼616 and a chip 62 Since the chip 62 is functionally similar to the chip 52, it is not repeatedly discussed herein. The antennas 611∼616 are separately arranged on six different faces of the cuboidal object 60. Therefore, the orientation of the RFID tag can indicate how the cuboidal object 60 is positioned.

As can be seen from **Figs. 5** **and** **6**, when the antennas of the RFID tag are properly arranged on different locations on an object, the manner in which the object is position can determine which one of the antennas will receive the RF signal transmitted from the reader. Since the RFID tag of the present invention can send out identification data corresponding to the antenna that receives the RF signal, the processor of the RFID system of the present invention is able to determine how the object is positioned according to the identification data received from the RFID tag. If the object is provided with a pattern that is meaningful only when the object is positioned to orient toward a specific direction, the RFID system of the present invention can be applied to a large number of different fields. For example, when a puzzle pattern is provided on an object, the object can be used as a puzzle piece, and the RFID system can be implemented as a puzzle system. Or, for example, when a plurality of learning patterns or designs is provided on an object, the object can be used as a multifunctional learning card, and the RFID system can be implemented as an induction-type learning system

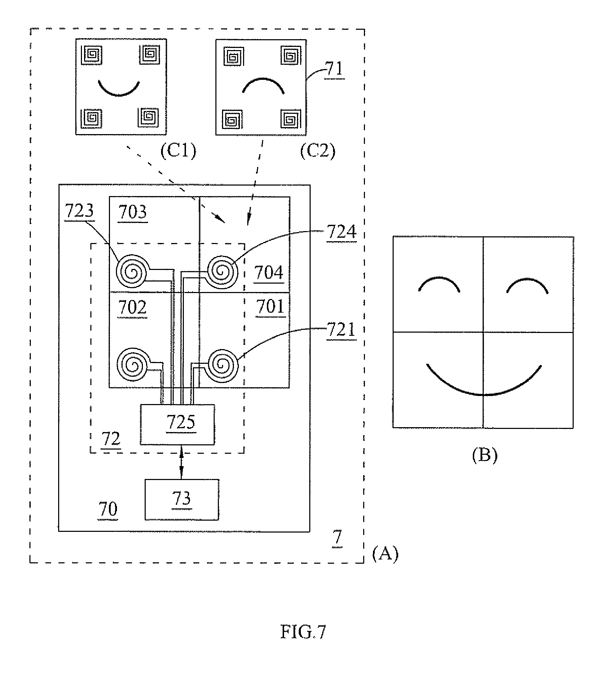

**Fig. 7** schematically illustrates a puzzle system employing the RFID system of the present invention. In **Fig. 7**, part (A) illustrates a puzzle system 7, and part (B) illustrates the puzzle system with puzzle pieces thereof having been arranged at correct locations and in correct orientation. The puzzle system 7 comprises a platform 70, a plurality of puzzle pieces 71, a reader 72, and a processor 73. On the platform 70, there is defined a plurality of zones 701∼704, on each of which, one of the puzzle pieces 71 can be movably laid. The reader 72 has a plurality of transmission antennas 721∼724 being separately arranged on the zones 701∼704, The reader 72 and the processor 73 are preferably provided inside the platform 70, Since each of the puzzle pieces 71 is provided at four corners with an antenna each, the processor 73 can determine how the puzzle pieces 71 are positioned or oriented in each of the zones 701∼704. For instance, parts (C1) and (C2) in **Fig. 7** show two different ways of positioning a puzzle piece 71 Since the puzzle piece 71 has a puzzle pattern provided thereon, the puzzle piece 71 must be correctly laid in one zone and correctly oriented to complete a puzzle game. For example, the part (C2) in **Fig. 7** indicates a correctly positioned and oriented puzzle piece 71, while the part (C1) indicates a wrongly positioned and oriented puzzle piece 71. The reader 72 comprises a detection circuit 725 for reading identification data received by the transmission antennas 721∼724, and the processor 73 can determine whether the puzzle pieces 71 are correctly laid in the zones 701∼704 according to the received identification data.

The present invention has been described with some preferred embodiments thereof and it is understood that many changes and modifications in the described embodiments can be carried out without departing from the scope and the spirit of the invention that is intended to be limited only by the appended claims.

## Claims

1. A radio-frecluezlcy identification (RFID) tag (1), comprising:
a plurality of antennas(11] to 114) for independently receiving a radio-frequency (RF) signal(421) each;
a plurality of power receiving modules(121 to 124) being connected to the plurality of antennas(111 to 114) in a one-to-one correspondence and adapted to output an electric power(14) according to the RF signal(421); and
a wireless communication module(13) being electrically connected to the plurality of power receiving modules(121 to 124) for receiving the electric power(14), so as to determine an identification data(one of 151 to 154) that is corresponding to one of' the antennas(111 to 114) that receives the RF signal(421) and send out the identification data via at least one of the antennas(111 to 114).

2. The RFID tag as claimed in claim 1, further comprising a logic circuit(24) and a memory(23), wherein the memory(23) stores a first identification data(231), and the logic circuit(24) is electrically connected to the plurality of power receiving modules(121 to 124) and adapted to generate a position data(251) that is corresponding to the antenna receiving the RF signal, and the wireless communication module(13), after receiving the electric power, combines the first identification data(231) with the position data(251) to generate the identification data(252).

3. The RFID tag as claimed in claim 1, further comprising a memory(33) for storing a plurality of the identification data(331 to 334) which are in a one-to-one correspondence to the plurality of antennas(211 to 214), and the wireless communication module(13), after receiving the electric power(14), reading from the memory(33) one of the identification data(331 to 334) that is corresponding to the antenna receiving the RF signal.

4. The RFID tag as claimed in claim 1, wherein the wireless communication module(13) comprises a modulation circuit(26) which generates a modulation signal based on the identification data, and sends out the modulation signal via at least one of the plurality ofantennas(211 to 214).

5. An RFID tag(2), comprising:
a memory(23) capable of storing a first identification data(231) thereon;
a plurality of antennas(211 to 214) capable of independently receiving an RF signal each;
a plurality of power receiving modules(221 to 224) being connected to the plurality of antennas(211 to 214) in a one-to-one correspondence and adapted to output electric power based on the RF signal for the RFID tag(2) to operate;
a logic circuit(24) being electrically connected to the plurality of power receiving modules(221 to 214) and adapted to generate a position data(251) that is corresponding to the antenna receiving the RF signal;
a control circuit(25) capable of combining the first identification data(231) with the position data(251) to generate a second identification data(252); and
a modulation circuit(26) capable of modulating the second identification data(252) to generate a modulated signal which is then sent out via at least one of the plurality of antennas(211 to 214).

6. The RFID tag as claimed in claim 1 or 5, wherein the power receiving modules(121 to 124, 221 to 224) each comprise a radio frequency-to-direct current (RF-to-DC) circuit.

7. The RFID tag as claimed in claim 1 or 5, further comprising a power management module being electrically connected to the plurality of power receiving modules(221 to 224) and capable of generating other electric power with different voltage values.

8. An RFID system capable of detecting RFID tag orientation, comprising:
at least one RFID tag, which can be any one of that being claimed in claims 1 to 7, and the RFID tag being able to receive an RF signal and wirelessly output an identification data;
a reader(40) capable of generating the RF signal and receiving the identification data; and
a processor(44) capable of determining an orientation of the RFID tag(49) based on the identification data.

9. The RFID system as claimed in claim 8, wherein the RFID tag is arranged on a planar object (50) and the antennas(511 to 514) of the RFID tag are arranged at different positions on the planar object(50).

10. The RFID system as claimed in claim 8, wherein the RFID tag is arranged on a three-dimensional (3D) object(60) with a plurality of antennas(611 to 616) of the RFID tag being arranged on different faces of the 3D object(60).

11. The RFID system as claimed in claim 9 or 10, wherein the processor(44) verifies whether the planar object(50) or the 3D object(60) is correctly positioned based on the orientation of the RFID tag.

12. The RFID system as claimed in claim 9 or 10, wherein the planar object(50) or the 3D object(60) is provided with at least one puzzle pattern.

13. The RFID system as claimed in claim 12, further comprising a platform(70), wherein the reader(40) and the processor(44) are arranged within the platform(70), and the planar object(50) or the 3D object(60) is movably laid on the platform(70).

14. A puzzle system, comprising:
a platform(70);
a plurality of puzzle pieces(71), each of which being provided with at least one RFID tag, which can be any one of that as that being claimed in claims 1 to 7, and the RFID tag being able to receive an RF signal and wirelessly output an identification data;
a reader(72) for generating the RF signal and receiving the identification data; and
a processor(73) for determining an orientation of the RFID tag based on the identification data, and further determining whether the plurality of puzzle pieces(71) are correctly positioned based on the orientation of the RFID tag.

15. The puzzle system as claimed in claim 14, wherein the puzzle pieces each are a planar object(50), and the antennas of the RFID tag are arranged at different positions on the planar object(50).

16. The puzzle system as claimed in claim 14, wherein the puzzle pieces each are a 3D object(60), and the antennas of the RFID tag are arranged on different faces of the 3D object(60).
